# EUROPEAN PATENT SPECIFICATION

(11) **EP 1 969 892 B1**
(45) Date of publication and mention of the grant of the patent: **21.03.2018**
(21) Application number: 07700865.4
(22) Date of filing: 05.01.2007
(51) Int. Cl.: H04L 1/00, H04L 1/16, H04B 17/00

(54) **METHOD OF TRANSMITTING FEEDBACK INFORMATION IN A WIRELESS COMMUNICATION SYSTEM**
VERFAHREN ZUR SENDUNG VON FEEDBACK-INFORMATIONEN IN EINEM DRAHTLOSEN KOMMUNIKATIONSSYSTEM
PROCEDE DE TRANSMISSION D'INFORMATIONS EN RETOUR DANS UN SYSTEME DE COMMUNICATION SANS FIL

(30) Priority: 05.01.2006 US 757063 P; 02.01.2007 KR 20070000097
(43) Date of publication of application: 17.09.2008
(73) Proprietor: LG Electronics Inc., Seoul, 07336 (KR)
(72) Inventor: LEE, Young Dae, Hanam-si, Gyeonggi-do, 465-711 (KR); CHUN, Sung Duck, Anyang-si, Gyeonggi-do, 431-773 (KR); JUNG, Myung Cheul, Seoul, 156-832 (KR); PARK, Sung Jun, Gunpo-si, Gyeonggi-do, 435-768 (KR)
(74) Representative: Ter Meer Steinmeister & Partner
(86) International application number: PCT/KR2007/000077
(87) International publication number: WO 2007/078171

(56) References cited:
- WO-A1-2005/074312
- WO-A1-2005/088886
- WO-A1-2007/066883
- WO-A2-2005/072073
- HUAWEI: 'Further Considerations on Multiplexing Method of Shared Control Channel in Uplink Single-Carrier FDMA' 3GPP TSG-RAN WG1, [Online] vol. R1-051430, 07 November 2005, pages 1 - 6, XP002451165 Retrieved from the Internet: <URL:http://www.3gpp.org/ftp/TSG_RAN/WG1_RL 1/TSGR1_43/Docs/R1-051430.zip>
- NTT DOCOMO ET AL.: 'Multiplexing Method of Shared Control Channel in Uplink Single-Carrier FDMA Radio Access' 3GPP TSG-RAN WG1, [Online] vol. R1-051143, 10 October 2005, pages 1 - 8, XP002450609 Retrieved from the Internet: <URL:http://www.3gpp.org/ftp/tsg_ran/wg1_rl 1/TSGR1_42bis/Docs/R1-051143.zip>

## Description

### TECHNICAL FIELD

The present invention relates to a wireless communication system, more particularly, to a method of transmitting feedback information in a wireless communication system.

### BACKGROUND ART

A method of the generic kind for reporting channel quality information for representing the channel quality by subscriber stations in a mobile communication system is known from WO 2005/072073 A2. The subscriber station receives a CQI request from the base station, the base station allocates an uplink resource to the subscriber station, and a subscriber station uses the uplink resource and transmits the channel measurement report to the base station. In order for the subscriber station to report the downlink CQI using the allocated uplink radio resource, CQI piggyback indicator is set to an uplink radio resource allocation information. The subscriber station transmits the piggyback message incorporated in the uplink data together to report the CQI for the downlink.

In the following further relevant background art is described.

Recently, an adaptive modulation and coding (AMC) scheme and an auto repeat request (ARQ) or a hybrid auto repeat request (HARQ) scheme are generally used in a mobile communication system in order to enhance a throughput so that an efficient communication can be performed.

In the AMC scheme, a modulation and a channel coding manner in a transmitting side are changed in accordance with a channel status when the transmitting side transmits data to a receiving side. The transmitting side can find the channel status by itself, but in general the receiving side measures the channel status and informs the transmitting side of the result so that the transmitting side obtains channel status information. The channel status information can be called channel quality information.

In the ARQ or HARQ scheme, the receiving side informs the transmitting side whether data received from the transmitting side has an error or not and the transmitting side retransmits data when the received data has an error. Namely, when receiving data from the transmitting side without an error, the receiving side transmits an ACK to the transmitting side and when receiving data from the transmitting side with an error, the receiving side transmits a NACK to the transmitting side so that the transmitting side retransmits the data.

In the AMC scheme or the ARQ or HARQ scheme, it is necessary for the receiving side to transmit feedback information such as channel quality information and ACK/NACK to the transmitting side. In this case, the receiving side needs radio resources for transmitting the feedback information to the transmitting side. Since the radio resources for transmitting the feedback information such as channel quality information or ACK/NACK, etc are statically allocated to the receiving side in the code division multiple access (CDMA) communication system, the radio resources once allocated to the receiving side cannot be used for other purposes although it is unnecessary for the feedback information to be transmitted, so that total radio resources are wasted.

### DISCLOSURE OF INVENTION

Accordingly, the present invention is directed to a method of transmitting feedback information in a wireless communication system that substantially obviates one or more of the problems due to limitations and disadvantages of the related art.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

The object is solved by the features of the independent claims.

To achieve these and other advantages and in accordance with the purpose of the present invention, as embodied and broadly described, the present invention is embodied in a method of transmitting feedback information at a user equipment (UE) in a wireless communication system comprising a network and a plurality of UEs according to claim 1.

The feedback information may include at least one of channel quality information and ACK/NACK. Preferably, the wireless communication system is an orthogonal frequency division multiplexing (OFDM) or orthogonal frequency division multiple access (OFDMA) system and the radio resource allocation information is information associated with a time-frequency region for transmitting the feedback information.

The feedback information can be transmitted through a control information transmission region. Alternatively, the feedback information can be transmitted with traffic data through a data transmission region. The signaling information may include an identifier of the UE or a service transmitted to the UE and downlink transport format and rate information (TFRI) and information associated with a time-frequency region through which the downlink data is transmitted.

### BRIEF DESCRIPTION OF DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram of a network structure of E-UMTS (evolved universal mobile telecommunications system);
FIG. 2 is an architectural diagram of a radio interface protocol between UE (user equipment) and UTRAN (UMTS terrestrial radio access network) based on the 3GPP radio access network standard;
FIG. 3A and 3B are diagrams illustrating preferred embodiments of the present invention; and
FIG. 4A and FIG. 4B are diagrams illustrating another preferred embodiments of the present invention.

### BEST MODE FOR CARRYING OUT THE INVENTION

Reference will now be made in detail to the preferred embodiments of the present invention, examples of which are illustrated in the accompanying drawings.

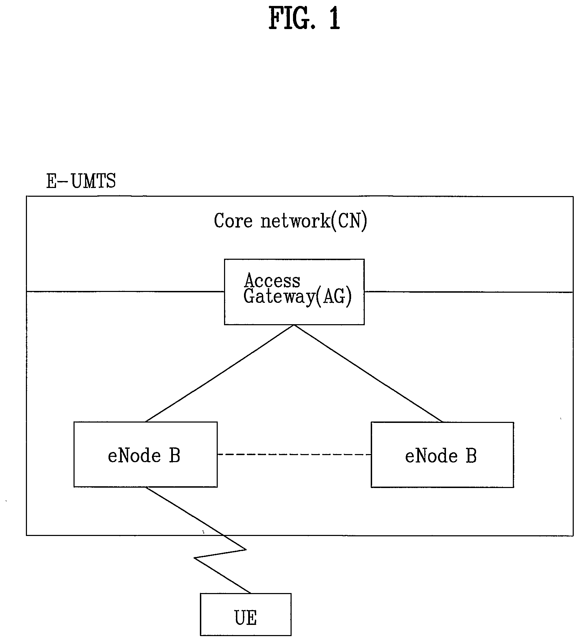

FIG. 1 is a block diagram of a network structure of an E-UMTS (Evolved-Universal Mobile Telecommunications System) to which technical features of the present invention are applied. An E-UMTS is a system evolving from the conventional UMTS and its basic standardization is currently handled by the 3GPP (3^{rd} Generation Partnership Project). The E-UMTS can also be called an LTE (Long Term Evolution) system.

Referring to FIG. 1, an E-UMTS network includes a user equipment (hereinafter abbreviated 'UE'), a base station (hereinafter named 'eNode B' or 'eNB') and an access gateway (hereinafter abbreviated 'aGW') connected to an external network by being located at an end of the E-UMTS network. The aGW may be classified into a part for handling user traffic and a part for handling control traffic. A first aGW for processing new user traffic may communicate with a second AG for processing control traffic via a new interface. A eNode-B may include at least one cell. A first interface for transmitting user traffic or a second interface for transmitting control traffic may be located between several eNode-Bs. The CN may include the aGW and a plurality of nodes for registering users of User Equipments (UEs). If required, another interface for discriminating between the E-UTRAN and the CN may also be used for the LTE network. The aGW manages mobility of a UE by unit of a tracking area (TA). A TA comprises a plurality of cells. When a UE moves into a TA from another TA, the UE informs the aGW of the change of the TAs. The eNode B includes at least one cell.

Layers of a radio interface protocol between a UE and a network can be classified into a first layer L1, a second layer L2 and a third layer L3 based on three lower layers of OSI (open system interconnection) reference model widely known in communication systems. A physical layer belonging to the first layer L1 provides an information transfer service using a physical channel. A radio resource control (hereinafter abbreviated 'RRC') located at the third layer plays a role in controlling radio resources between the UE and the network. For this, the RRC layer enables RRC messages to be exchanged between the UE and the network. The RRC layer can be distributively located at network nodes including an eNode B, an AG and the like or at either the Node B or the AG independently.

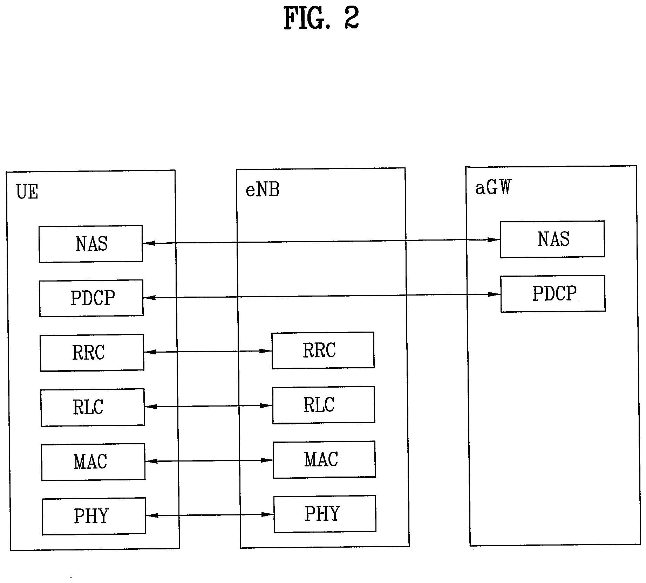

FIG. 2 is an architectural diagram of a radio interface protocol between a user equipment (UE) and a UMTS terrestrial radio access network (UTRAN) based on the 3GPP radio access network standard. Referring to FIG. 2, a radio interface protocol vertically includes a physical layer, a data link layer, and a network layer and horizontally includes a user plane for data information transfer and a control plane for signaling transfer. The protocol layers in FIG. 2 can be classified into a first layer (L1), a second layer (L2), and a third layer (L3) based on three lower layers of the open system interconnection (OSI) standard model widely known in the communications systems.

First, the physical layer as the first layer provides information transfer service to an upper layer using physical channels. The physical layer (PHY) is connected to a medium access control (hereinafter abbreviated 'MAC') layer above the physical layer via transport channels. Data are transferred between the medium access control layer and the physical layer via the transport channels. Moreover, data is transferred between different physical layers, and more particularly, between one physical layer of a transmitting side and the other physical layer of a receiving side via the physical channels. A downlink physical channel of the E-UMTS is modulated according to an orthogonal frequency division multiplexing (OFDM) scheme and time and frequency are used as radio resources.

The medium access control (hereinafter abbreviated 'MAC') layer of the second layer provides a service to a radio link control (hereinafter abbreviated RLC) layer above the MAC layer via logical channels. The RLC layer of the second layer supports reliable data transfer. In order to effectively transmit IP packets (e.g., IPv4 or IPv6) within a radio-communication period having a narrow bandwidth, a PDCP layer of the second layer (L2) performs header compression to reduce the size of a relatively-large IP packet header containing unnecessary control information.

A radio resource control (hereinafter abbreviated 'RRC') layer located on a lowest part of the third layer is defined in the control plane only and is associated with configuration, reconfiguration and release of radio bearers (hereinafter abbreviated 'RBs') to be in charge of controlling the logical, transport and physical channels. In this case, the RB means a service provided by the second layer for the data transfer between the UE and the UTRAN.

As a downlink transport channel carrying data to UEs from the network, there is a broadcast channel (BCH) carrying system information and a downlink shared channel (SCH) carrying user traffic or control messages. The traffic or control messages of a downlink multicast or broadcast service can be transmitted via the downlink SCH or a additional downlink multicast channel (MCH). Meanwhile, as an uplink transport channel carrying data to the network from UEs, there is a random access channel (RACH) carrying an initial control message and an uplink shared channel (UL-SCH) carrying user traffic or control message.

As a logical channel located on an upper part of the transport channels, there is a broadcast channel (BCCH), a paging control channel (PCCH), a common control channel (CCCH), a multicast control channel (MCCH) or a multicast traffic channel (MTCH), etc.

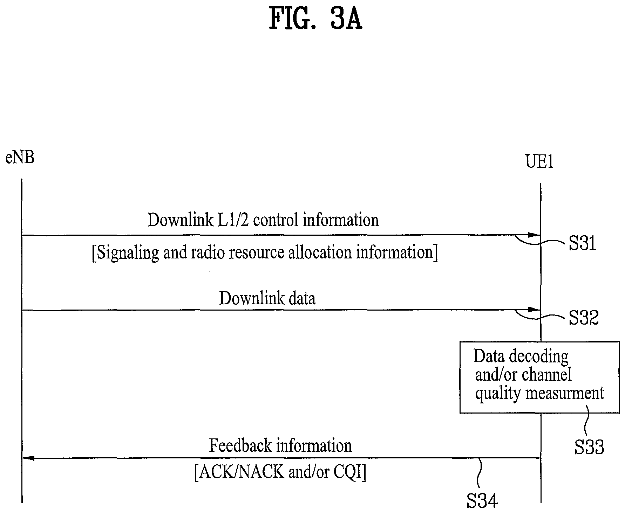

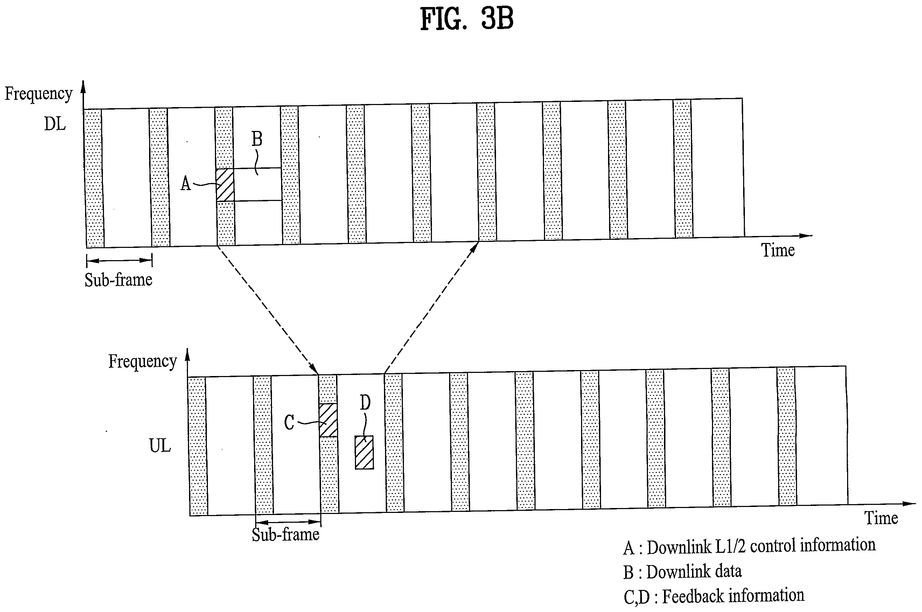

FIG. 3A is a flow diagram illustrating an embodiment of the present invention and FIG. 3B is a diagram for describing the embodiment on time-frequency plane.

In the E-UMTS system, an OFDM is used on the downlink and a single carrier frequency division multiple access (SC-FDMA) on the uplink. The OFDM scheme using multiple carriers allocates resources by unit of multiple subcarriers including a group of carriers and utilizes an orthogonal frequency division multiple access (OFDMA) as an access scheme.

A physical layer of an OFDM or OFDMA scheme divides active carriers into a plurality of groups and transmits each group to a different receiving side. Radio resource allocated to each UE which is defined as a time-frequency region on a two-dimensional sphere comprises continuous subcarriers on a frequency axis and symbols on a time axis. A time-frequency region in the OFDM or OFDMA scheme is a rectangular form sectioned by time and frequency coordinates. One or more time-frequency region can be allocated to an uplink for a UE and an eNB can transmit one or more time-frequency region to a UE. In order to define a time-frequency region on the two-dimensional sphere, the number of OFDM symbols and subcarriers starting from a point having an offset from a reference point should be given.

The E-UMTS uses 10 ms radio frame comprising 20 sub-frames. Namely, a sub-frame is 0.5 ms length. A resource block comprises one sub-frame and twelve subcarriers, each of which is 15 kHz. One sub-frame comprises a plurality of OFDM symbols and a part of the plurality of OFDM symbols can be used for L1/2 control information. In FIG. 3B, a sub-frame comprises a L1/2 control information transmission region (the hatching part) and a data transmission region (the non-hatching part).

Referring to FIGs. 3A and 3B, an eNB of a network transmits downlink L1/2 control information to a UE1 via the 'A' region of FIG. 3B [S31]. The downlink L1/2 control information includes signaling information with which the UE1 receives downlink data from the network and uplink radio resource allocation information with which the UE1 transmits feedback information for the downlink information to the network. More particularly, the downlink L1/2 information may include information as follows.
1) A UE identity or service identity: An identity of a service for which the downlink L1/2 control information will be used or a UE which will use the downlink L1/2 control information is included in the downlink L1/2 control information. In case of the UE identity, a cell level identity such as a C-RNTI allocated and managed by a cell or a tracking area (TA) level identity allocated and managed by unit of a TA can be included.
2) HARQ and ARQ information: HARQ and ARQ information corresponding to the UE identity or the service identity is included in the downlink L1/2 control information.
3) Downlink TFRI information and downlink scheduling information for data transmission: Downlink transport format and rate information (TFRI) including modulation and coding information, transport block sizes and transport block set sizes, and information associated with time (sub-frame or symbol) and frequency (sub-carrier) through which the downlink data is transmitted is included in the downlink L1/2 control information. The TFRI and the information of time and frequency (time-frequency region information like the 'B' region in FIG. 3B) corresponds to the UE identity or the service identity.
4) Uplink radio resource allocation information for feedback information: Uplink radio resource information for transmitting feedback information corresponding to the UE identity or the service identity is included in the downlink L1/2 control information. The uplink radio resource information is associated with information on time (sub-frame or symbol) and frequency (sub-carrier) allocated for the feedback information such as ACK/NACK information and/or channel quality information during a scheduling duration. The uplink radio resource allocation information may include a period and a condition for reporting the channel quality information, and the number of repetition when the feedback information is repeatedly transmitted.

The eNB periodically transmits scheduling information to UE1 at every scheduling period for transmitting the downlink data. The scheduling information can be transmitted at a point i.e. at a specific sub-carrier and symbol during a transmission time interval (TTI) (e.g. a sub-frame of 0.5 ms). Accordingly, the eNB may perform scheduling of data transmission for a plurality of UEs at every TTI or sub-frame. Preferably, scheduling information for a UE can be transmitted with a longer period including a plurality of TTIs or sub-frames considering capability of the UE or the eNB. For this, the eNB sets up a length and a starting point of the period and transmits information on the length and the starting point to the UE. The starting point of the period can be represented as an offset from a reference point.

The eNB may consider discontinuous reception (DRX) operation of the UE1 for determining the scheduling period. Namely, the scheduling period can be set up to be equal to the DRX cycle or multiple times of the DRX cycle so that the DRX operation of the UE1 can become efficient. The scheduling information includes uplink scheduling information for uplink data transmission and downlink scheduling information for downlink data transmission.

The eNB transmits downlink data to the UE1 in accordance with the downlink TFRI information and the scheduling information for downlink data transmission included in the downlink L1/2 control information [S32]. In other words, the eNB transmits the downlink data having data formats indicated by the downlink TFRI information to the UE1 through the 'B' region of the FIG. 3B.

The UE1 tries periodically to receive the downlink L1/2 control information at every scheduling period set up by the eNB [S31]. The UE1 receives the downlink L1/2 information periodically and determines whether the UE or service identity included in the downlink L1/2 control information is identical to a UE identity or service identity stored in the UE1.

When the UE identity or the service identity included in the downlink L1/2 control information is identical to that of the UE1, the UE1 receives the downlink data using the TFRI information and the HARQ/ARQ information, etc included in the downlink L1/2 control information [S32].

The UE1 decodes the received downlink data and determines whether the decoded data has an error [S33]. For example, error detection code like cyclic redundancy check (CRC) code can be used for detecting the error of the received downlink data. The UE1 may measure channel quality between the UE1 and the eNB. For example, a bit error rate (BER), a frame error rate (FER) or reception power of the received downlink data or reference signals can be used for measuring the channel quality.

The UE1 transmits an ACK or a NACK as feedback information to the received downlink data to the eNB [S34]. The UE1 may also transmit channel quality information periodically or non-periodically as the feedback information to the eNB. The channel quality information can be transmitted in a form of a channel quality indicator (CQI). The feedback information is transmitted using uplink radio resource allocated by the uplink radio resource allocation information included in the downlink L1/2 control information received from the eNB. In FIG. 3B, the 'D' region is a time-frequency region through which uplink L1/2 control information is transmitted to the eNB and the feedback information can be included in the uplink L1/2 control information to be transmitted. Alternatively, the 'D' region in FIG. 3B is a time-frequency region through which the UE1 transmits uplink data to the eNB and the feedback information can be included in the uplink data in a form of a control protocol data unit (PDU) or a piggyback protocol data unit (PDU).

When the downlink L1/2 control information includes a period and a condition for reporting the channel quality information, and the number of repetition when the feedback information is repeatedly transmitted, the UE1 transmits the feedback information according to the information.

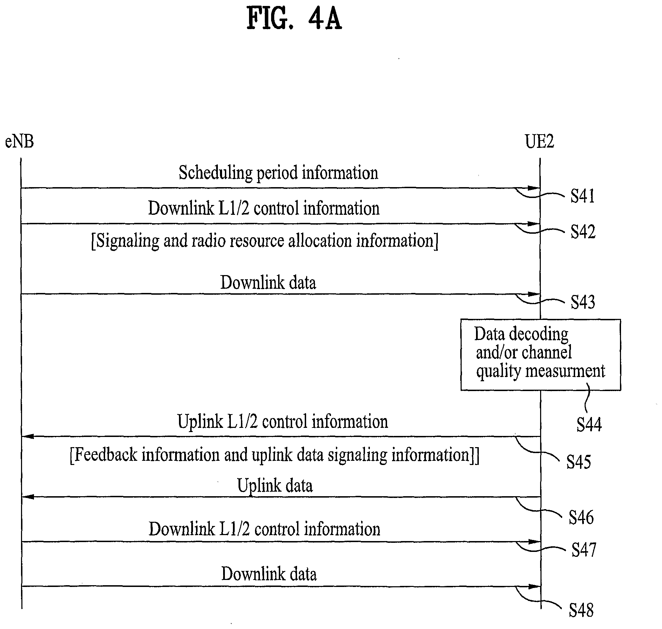

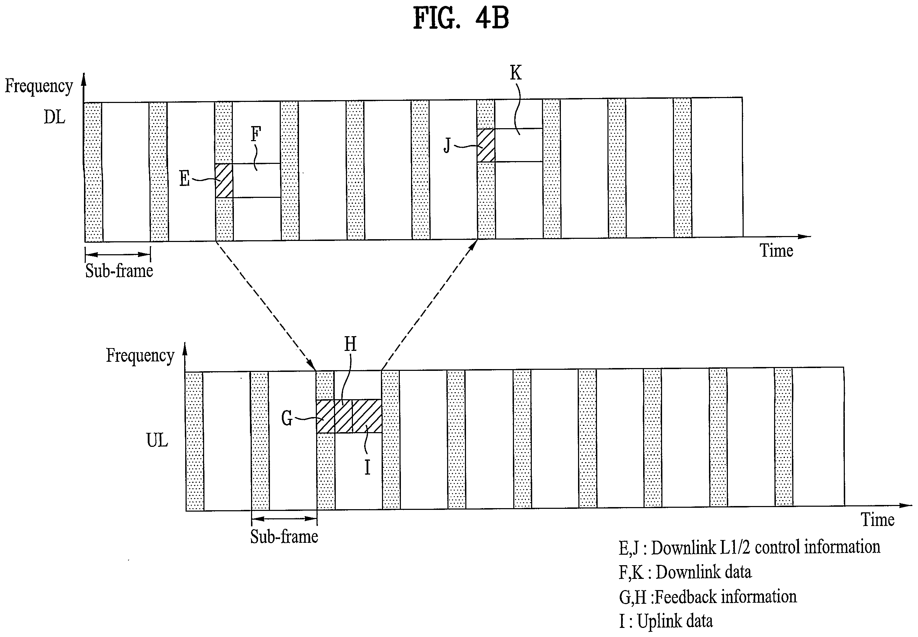

FIG. 4A is a flow diagram illustrating another embodiment of the present invention and FIG. 4B is a diagram for describing the embodiment on time-frequency plane.

Referring to FIGs. 4A and 4B, an eNB transmits scheduling period information to a UE2 [S41]. The eNB transmits downlink L1/2 control information in accordance with the scheduling period on the 'E' region of FIG. 4B [S42]. It is possible for the scheduling period information to be included in the downlink L1/2 control information.

The downlink L1/2 control information includes signaling information with which the UE2 receives downlink data from the network and uplink radio resource allocation information with which the UE2 transmits feedback information for the downlink information to the network. Other information described in the embodiment of FIGs. 3A and 3B can be included in the downlink L1/2 control information.

The UE2 tries periodically to receive the downlink L1/2 control information at every scheduling period set up by the eNB [S42]. The UE2 receives the downlink L1/2 information periodically and determines whether the UE or service identity included in the downlink L1/2 control information is identical to a UE identity or service identity stored in the UE2.

When the UE identity or the service identity included in the downlink L1/2 control information is identical to that of the UE2, the UE2 receives the downlink data using the TFRI information and the HARQ/ARQ information, etc included in the downlink L1/2 control information [S43].

The UE2 decodes the received downlink data and determines whether the decoded data has an error [S44]. The UE2 transmits an ACK or a NACK as feedback information to the received downlink data to the eNB [S45]. The UE2 may also transmit channel quality information periodically or non-periodically as the feedback information to the eNB. The channel quality information can be transmitted in a form of a channel quality indicator (CQI). The feedback information is transmitted using uplink radio resource allocated by the uplink radio resource allocation information included in the downlink L1/2 control information received from the eNB. In FIG. 4B, the 'G' region is a time-frequency region on which uplink L1/2 control information is transmitted to the eNB and the feedback information can be included in the uplink L1/2 control information to be transmitted. Alternatively, the 'H' region in FIG. 4B is a time-frequency region on which the UE2 transmits uplink data to the eNB and the feedback information can be included in the uplink data in a form of a control protocol data unit (PDU) or a piggyback protocol data unit (PDU). The upper L1/2 control information transmitted from the UE2 to the eNB may include information as follows.
1) Scheduling information for uplink transmission: The uplink scheduling information which is transmitted by the UE2 and used a scheduler located in the eNB includes a logical channel identity and UE buffer occupancy, etc.
2) Uplink TFCI information: The uplink TFCI information which is necessary for decoding the uplink data includes information associated with a modulation and coding scheme, transport block sizes, and transport block set sizes, etc.
3) HARQ and ARQ information
4) Happy bit: The happy bit is necessary for informing the eNB that uplink radio resource allocated by the eNB for uplink data transmission of the UE2 is insufficient.

The UE2 transmits the uplink data to the eNB according to the uplink L1/2 control information on the 'T' region of FIG. 4B [S46]. The eNB receives the uplink L1/2 control information and then receives the uplink data using the received the uplink L1/2 control information.

The eNB transmits downlink L1/2 control information to the UE2 on the 'J' region of FIG. 4B [S47]. The downlink L1/2 control information includes an ACK or NACK for the uplink data transmitted by the UE2. The UE2 receives the downlink L1/2 control information and determines a UE identity or a service identity included in the downlink L1/2 control information is identical to an identity stored in the UE2. If the identities are identical and the downlink L1/2 control information includes an ACK for the uplink data, the UE2 realizes that uplink data transmission is successful. If the identities are identical and the downlink L1/2 control information includes a NACK for the uplink data, the UE2 retransmits the uplink data.

The eNB may transmit downlink data to the UE2 on the 'K' region at the same time of transmitting feedback information for the uplink data [S48]. In this case, the scheduling period for the downlink data transmission is identical to a timing point of transmitting the feedback information for the uplink data transmission. The UE2 receives the downlink data using the TFRI information and the HARQ/ARQ information, etc included in the downlink L1/2 control information.

While the present invention has been described and illustrated herein with reference to the preferred embodiments thereof, it will be apparent to those skilled in the art that various modifications and variations can be made therein without departing from the scope of the invention. Thus, it is intended that the present invention covers the modifications and variations of this invention that come within the scope of the appended claims.

### INDUSTRIAL APPLICABILITY

The present invention is applicable to such a wireless communication system as wireless Internet, mobile communication system and the like.

## Claims

1. A method of transmitting feedback information at a user equipment, UE, in an Evolved Universal Mobile Telecommunications System, E-UMTS, or Evolved UMTS Terrestrial Radio Access Network, E-UTRAN, system, the method comprising:
receiving control information including resource allocation information for a reporting of channel quality information, CQI, from a base station, BS, through a control information transmission region, the control information transmission region is immediately followed by a data transmission region in a time domain of a subframe (S42),
wherein the control information further comprises a cell-radio network Temporal identifier, C-RNTI, corresponding to the user equipment and a condition for the reporting of the CQI,
non-periodically transmitting the CQI to the BS through an uplink radio resource indicated by the resource allocation information according the control information (S45).

2. The method of claim 1, further comprising transmitting at least one scheduling information for uplink transmission, uplink transport format and rate information, TFRI, or information indicating the uplink radio resource allocated by the BS for uplink data transmission is insufficient (S45).

3. The method of claim 2, wherein the scheduling information includes a logical channel identity or a buffer occupancy of the UE.

4. The method of claim 1, wherein the control information further includes a UE identity or a service identity, downlink transport format and rate information, TFRI, and information associated with a time-frequency region through which the downlink data is transmitted.

5. The method of claim 1, wherein the control information further comprises information related to a scheduling period of the UE,
wherein the scheduling period of the UE is set to be equal to a discontinuous reception, DRX, cycle or multiple times of the DRX cycle.

## Patentansprüche

1. Verfahren zum Senden von Rückmeldungsinformationen an ein Anwendergerät, UE, in einem weiterentwickelten universellen Mobilfunktelekommunikationssystem, E-UMTS, oder einem weiterentwickelten terrestrischen UMTS-Funkzugangsnetzsystem, E-UTRAN-System, wobei das Verfahren Folgendes umfasst:
Empfangen von Steuerinformationen, die Betriebsmittelzuteilungsinformationen für eine Berichterstattung von Kanalqualitätsinformationen, CQI, enthalten, von einer Basisstation, BS, durch einen Steuerinformationsübertragungsbereich, wobei auf den Steuerinformationsübertragungsbereich unmittelbar ein Datenübertragungsbereich in einem Zeitbereich eines Unterrahmens (S42) folgt,
wobei die Steuerinformationen ferner eine Zellenfunknetzzeitkennung, C-RNTI, die dem Anwendergerät entspricht, und eine Bedingung für die Berichterstattung der CQI umfassen,
nicht periodisches Senden der CQI an die BS durch ein Aufwärtsstreckenfunkbetriebsmittel, das durch die Betriebsmittelzuteilungsinformationen angegeben wird, gemäß den Steuerinformationen (S45).

2. Verfahren nach Anspruch 1, das ferner umfasst, zumindest Planungsinformationen für eine Aufwärtsstreckenübertragung, Aufwärtsstreckentransportformat- und Aufwärtsstreckentransportrateninformationen, TFRI, oder Informationen, die angeben, dass das durch die BS für eine Aufwärtsstreckendatenübertragung zugeteilte Aufwärtsstreckenfunkbetriebsmittel unzureichend ist (S45), zu senden.

3. Verfahren nach Anspruch 2, wobei die Planungsinformationen eine Identität eines logischen Kanals oder eine Zwischenspeicherbelegung des UE enthalten.

4. Verfahren nach Anspruch 1, wobei die Steuerinformationen ferner eine UE-Identität oder eine Dienstidentität, Abwärtsstreckentransportformat- und Abwärtsstreckentransportrateninformationen, TFRI, und Informationen, die einem Zeit-Frequenz-Bereich, durch den die Abwärtsstreckendaten gesendet werden, enthalten.

5. Verfahren nach Anspruch 1, wobei die Steuerinformationen ferner Informationen umfassen, die sich auf eine Planungsperiode des UE beziehen,
wobei die Planungsperiode des UE so eingestellt ist, dass sie gleich einem nicht kontinuierlichen Empfangszyklus, DRX-Zyklus, oder mehreren DRX-Zyklen ist.

## Revendications

1. Procédé de transmission d'informations de rétroaction au niveau d'un équipement d'utilisateur, UE, dans un système de télécommunication mobile universel évolué, E-UMTS, ou dans un système de réseau d'accès radio terrestre UMTS évolué, E-UTRAN, le procédé comprenant :
la réception d'informations de commande comprenant des informations d'allocation de ressources pour un signalement d'informations de qualité de canal, CQI, depuis une station de base, BS, par l'intermédiaire d'une région de transmission d'informations de commande, la région de transmission d'informations de commande étant immédiatement suivie d'une région de transmission de données dans un domaine de temps d'une sous-trame (S42),
dans lequel les informations de commande comprennent en outre un identifiant temporel de réseau radio cellulaire, C-RNTI, correspondant à l'équipement d'utilisateur et une condition pour le signalement des CQI,
la transmission non périodique des CQI à destination de la BS par l'intermédiaire d'une ressource radio de liaison montante indiquée par les informations d'allocation de ressources en fonction des informations de commande (S45).

2. Procédé selon la revendication 1, comprenant en outre la transmission d'au moins l'une d'informations de programmation pour une transmission de liaison montante, d'informations de format et de débit de transport, TFRI, de liaison montante, ou d'informations indiquant que la ressource radio de liaison montante allouée par la BS pour une transmission de données de liaison montante est insuffisante (S45).

3. Procédé selon la revendication 2, dans lequel les informations de programmation comprennent une identité de canal logique ou une occupation de mémoire tampon de l'UE.

4. Procédé selon la revendication 1, dans lequel les informations de commande comprennent en outre une identité d'UE ou une identité de service, des informations de format et de débit de transport, TFRI, de liaison descendante et des informations associées à une région de temps-fréquence par l'intermédiaire de laquelle les données de liaison descendante sont transmises.

5. Procédé selon la revendication 1, dans lequel les informations de commande comprennent en outre des informations relatives à une période de programmation de l'UE,
dans lequel la période de programmation de l'UE est réglée pour être égale à un cycle de réception discontinue, DRX, ou à plusieurs fois le cycle de DRX.
